# EUROPEAN PATENT SPECIFICATION

(11) **EP 3 741 908 B1**
(45) Date of publication and mention of the grant of the patent: **02.08.2023**
(21) Application number: 18900808.9
(22) Date of filing: 05.12.2018
(51) Int. Cl.: D06F 58/10, D06F 58/02

(54) **CLOTHES DRYING APPARATUS AND CONTROL METHOD THEREOF**
WÄSCHETROCKNUNGSVORRICHTUNG UND STEUERUNGSVERFAHREN DAFÜR
APPAREIL DE SÉCHAGE DE VÊTEMENTS ET PROCÉDÉ DE COMMANDE DE CELUI-CI

(30) Priority: 16.01.2018 CN 201810040351
(43) Date of publication of application: 25.11.2020
(73) Proprietor: Gree Electric Appliances, Inc. of Zhuhai, Zhuhai, Guangdong 519070 (CN)
(72) Inventor: ZHU, Jing, Zhuhai City, Guangdong 519070 (CN); CHEN, Bo, Zhuhai City, Guangdong 519070 (CN); YAO, Yuzhou, Zhuhai City, Guangdong 519070 (CN); ZHONG, Jianfu, Zhuhai City, Guangdong 519070 (CN); SITU, Fuqi, Zhuhai City, Guangdong 519070 (CN); ZHU, Yandong, Zhuhai City, Guangdong 519070 (CN); CHEN, Mingyu, Zhuhai City, Guangdong 519070 (CN); GENG, Bin, Zhuhai City, Guangdong 519070 (CN); HE, Can, Zhuhai City, Guangdong 519070 (CN); LI, Qi, Zhuhai City, Guangdong 519070 (CN)
(74) Representative: V.O.
(86) International application number: PCT/CN2018/119397
(87) International publication number: WO 2019/141010

(56) References cited:
- CN-A- 101 017 052
- CN-A- 102 011 294
- CN-A- 108 166 226
- CN-U- 207 987 568
- JP-A- H03 139 400
- JP-A- 2003 265 896
- TW-A- 201 031 786
- US-A- 2 495 535
- US-A- 5 459 945
- US-A- 6 151 795

## Description

The present disclosure is a national stage application of International Patent Application No. PCT/CN2018/119397, which is filed on December 5, 2018, and claims priority to Chinese Patent Application No.201810040351.3, filed on January 16, 2018 and entitled "Clothes Drying Apparatus and Control Method of Clothes Drying Apparatus".

### Technical Field

The present disclosure relates to a technical field of clothes drying, in particular to a clothes drying apparatus and a control method of the clothes drying apparatus.

### Background

With an intelligent and diversified development of functions of home appliance, people have higher and higher requirements for washing machines. In order to meet requirements of users for getting dried clothes, the washing machine should not only have a function of washing clothes, but also have a function of drying clothes, so a washing-drying integral machine emerges.

A drying device installed on the washing-drying integral machine provided in the art known to inventors is usually an electric heating drying system or a heat pump drying system. An electric heating drying device uses an electric heater or electric heating wires to heat air, and uses a fan to feed the heated hot air into a drum to dry the clothes. However, a use of electric heating drying manner consumes a lot of energy and results in a waste of resources, at the same time, because a temperature in the drying process is high, it is difficult to meet requirements of heat-sensitive clothes.

In addition, compared with the electric heating manner, a method of using a heat-pump drying system to heat air and then using hot air to dry clothes has reduced consumption, and a drying temperature is adjusted between -20°C and 100°C. However, a drying time of the heat-pump drying system is generally more than 2 hours, which is too long.

The document TW201031786A1 discloses an energy-saving dryer, the energy-saving dryer includes: a main body having a containing tank and an opening connected to the containing tank; a lid which can be opened to associate with the lid of main body in an air-tight fashion to seal the opening of containing tank, so as to prevent the gas in the containing tank from leaking out to the exterior of the main body; a vacuum pump connected to a pipe conduit. The pipe conduit is associated with the main body and connected to the containing tank for extracting the gas or liquid in the containing tank; a refrigerator connected to a condenser tube; the condenser tube is associated with the main body and is disposed inside the containing tank to cool down the gaseous water molecule and reduce its volume, and to condense the gaseous water molecule into liquid droplet or solid ice to adhere onto the wall of the condenser tube, so as to accelerate the drying speed of the dried object, and achieve energy-saving effect.

### Summary

Some embodiments of the present disclosure provide a clothes drying apparatus and a control method with the clothes drying apparatus.

In an embodiment of the present disclosure, a clothes drying apparatus is provided. The clothes drying apparatus includes a chamber configured to accommodate clothes to be dried, an air duct structure communicated with the chamber and a negative pressure generating device communicated with the chamber. The air duct structure is configured to convey a cold airflow into the chamber, the cold airflow is used to solidify water moisture in the clothes to be dried. The negative pressure generating device is configured to form a negative pressure environment in the chamber, such that a solidified water moisture in the clothes to be dried undergoes sublimation in the negative pressure environment; the air duct structure is further configured to convey a hot airflow into the chamber, wherein the hot airflow is used to heat the clothes to be dried in the negative pressure environment, so as to promote the sublimation of the solidified water moisture in the clothes to be dried; the clothes drying apparatus further includes: a refrigerating portion, configured to cool an airflow in the air duct structure; and a heating portion, configured to heat an airflow in the air duct structure; the clothes drying apparatus further includes: a heat pump system. The heat pump system includes a first heat exchanger and a second heat exchanger disposed on a refrigerant circulation flow path of the heat pump system, the refrigerating portion is formed by the first heat exchanger, and the heating portion is formed by the second heat exchanger.

In some optional embodiments, a chamber wall of the chamber is provided with an air inlet and an air outlet, and the air duct structure includes a first air duct portion and a second air duct portion.

A first end of the first air duct portion is communicated with the air outlet, a second end of the first air duct portion is communicated with the air inlet, and the refrigerating portion is disposed in an inner chamber of the first air duct portion; and/or
a first end of the second air duct portion is communicated with an external environment, a second end of the second air duct portion is communicated with the air inlet, and the heating portion is disposed in an inner chamber of the second air duct portion.

In some embodiments, the air duct structure further includes an air inlet duct portion. Both the second end of the first air duct portion and the second end of the second air duct portion are connected with one end of the air inlet duct portion, and the other end of the air inlet duct portion is connected with the air inlet.

In an optional embodiment, the clothes drying apparatus further includes an opening and closing device, configured to open and close the first air duct portion.

In some preferred embodiments, the clothes drying apparatus further includes an airflow driving member, configured to drive the airflow to flow circularly between the first air duct portion and the chamber.

In some optional embodiments, the clothes drying apparatus further includes: a weight detecting device, configured to detect a weight of clothes in the chamber; and/or,
a humidity detecting device, configured to detect a humidity of gas pumped by the negative pressure generating device.

In some preferred embodiments, the clothes drying apparatus includes an insulated structure disposed at an outside of at least one of the weight detecting device and the humidity detecting device.

In some embodiments of the present disclosure, a control method of the clothes drying apparatus is also provided, which is applied to controlling the clothes drying apparatus. The control method includes a freezing step and a sublimating step. In the freezing step, a cold airflow is conveyed into the chamber to solidify the water moisture in the clothes to be dried. In the sublimating step, the negative pressure environment is formed in the chamber by means of the negative pressure generating device to sublimate the solidified water moisture in the clothes to be dried.

In some optional embodiments, in the sublimating step, a hot airflow is conveyed into the chamber to promote a sublimation of the solidified water moisture in the clothes to be dried.

In one of the embodiments of the present disclosure, a control method of the clothes drying apparatus is also provided, which is applied to controlling the clothes drying apparatus. The control method includes the freezing step and the sublimating step. In the freezing step, the cold airflow is conveyed into the chamber to solidify the water moisture in the clothes to be dried. In the sublimating step, the negative pressure environment is formed in the chamber by means of the negative pressure generating device to sublimate solidified water moisture in the clothes to be dried.

In the freezing step, a weight of the clothes to be dried is obtained, and when a variation of the weight of the clothes to be dried in first scheduled time is less than a predetermined variation, the clothes drying apparatus is controlled to enter the sublimating step; and/or,
after the clothes drying apparatus enters the sublimating step for second scheduled time, a humidity of gas pumped by the negative pressure generating device is obtained, and when the humidity of the gas is less than a predetermined humidity value, the clothes drying apparatus is controlled to exit the sublimating step.

The clothes drying apparatus and the control method of the clothes drying provided by at least a portion of embodiments of the present disclosure effectively prevent clothes from wrinkling, deforming and fading due to overly high drying temperatures, thereby achieving a better clothes drying effect and ensuring that a quality and shape of clothes remain unchanged after drying.

The clothes drying apparatus and the control method of the clothes drying apparatus provided by at least a part of embodiments of the present disclosure apply the principle of sublimation to clothes drying, reduce energy and time consumed by clothes drying, and are more environmentally friendly and higher clothes drying effect, and are suitable for wide promotion and use.

### Brief Description of the Drawings

By means of the description for embodiments of the present disclosure with reference to the accompanying drawings, the above and other objects, features and advantages of the present disclosure will become more apparent.
Fig. 1 illustrates a side view of a clothes drying apparatus according to an embodiment of the present disclosure.
Fig. 2 illustrates a schematic diagram of a connection structure of an air duct structure and a heat pump system of a clothes drying apparatus according to an embodiment of the present disclosure.
Fig. 3 illustrates a principles diagram of a control method of a clothes drying apparatus according to an embodiment of the present disclosure.

In the accompanying drawings:
1. chamber; 11. inner drum; 12. outer drum; 13. air inlet; 14. air outlet;
2. air duct structure; 21. first air duct portion; 211. the first end; 212; the second end; 213. refrigerating portion; 22. second air duct portion; 221. the first end; 222. the second end; 223. heating portion; 23. air outlet duct portion; 24. air inlet duct portion;
3. negative pressure generating device;
4. opening and closing device; 41. baffle;
5. airflow driving member;
6. heat pump system; 61. first heat exchanger; 62. second heat exchanger; 63. throttling device; 64. compressor;
7. weight detecting device;
8. filtering device.

### Detailed Description of the Embodiments

The present disclosure is described below based on the embodiments. Those of ordinary skill in the art should understand that the drawings are provided for the purpose of illustration, and the drawings are not necessarily to scale.

Unless explicitly required by the context, similar words "include", "including", "comprise", "comprising", and the like in the whole specification and claims should be interpreted as inclusive meanings rather than exclusive or exhaustive meaning, that is, meanings of "including but not limited to".

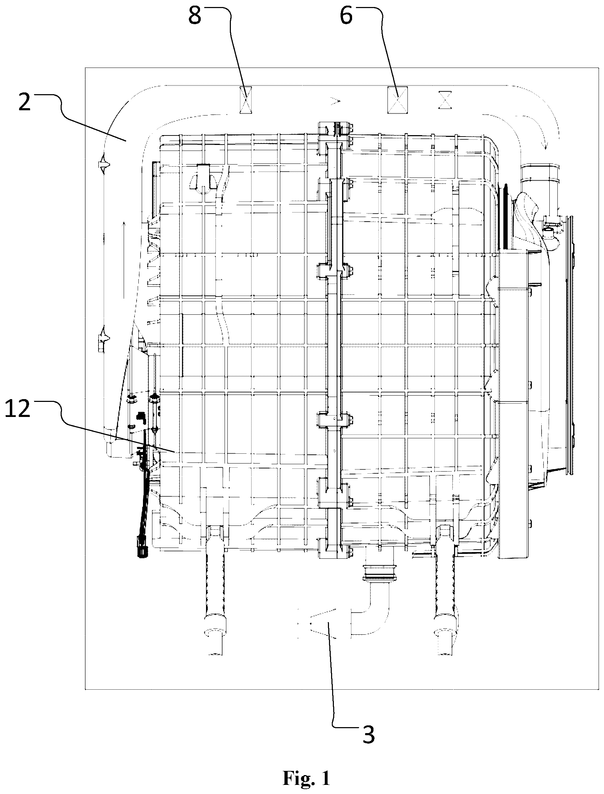

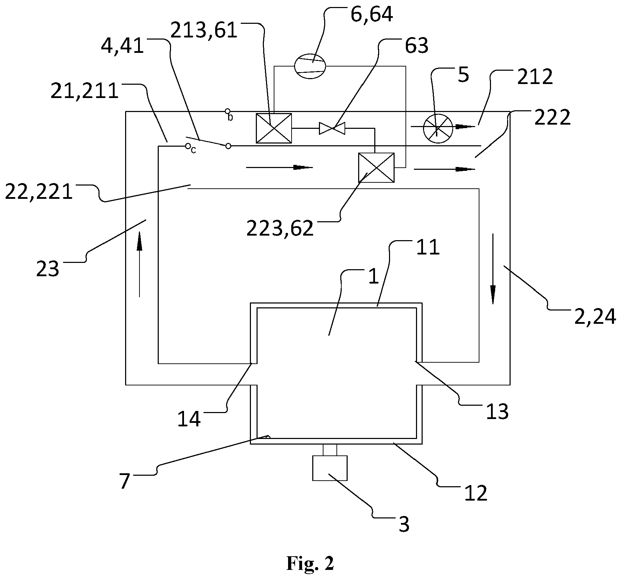

As shown in Fig. 1 and Fig. 2, some embodiments of the present disclosure provide a clothes drying apparatus, configured to dry clothes. The clothes drying apparatus is an apparatus specially configured to dry clothes, for example, a clothes dryer, or a washing-drying integral machine combined with a clothes washing apparatus. The clothes drying apparatus includes a chamber 1 configured to accommodate clothes to be dried and an air duct structure 2 communicated with the chamber and a negative pressure generating device 3 communicated with the chamber 1. The negative pressure generating device 3 is configured to form a negative pressure environment in the chamber 1, such that a solidified moisture in the clothes to be dried undergoes sublimation in the negative pressure environment to dry the clothes. The negative pressure generating device 3 is disposed at any position between the chamber 1 and a housing of the clothes drying apparatus, as long as the negative pressure generating device 3 is communicated with an inside of the chamber. In some embodiments, as shown in Fig. 1, the negative pressure generating device 3 is disposed at a bottom of the chamber 1 (referring to a location shown in Fig. 1). When the clothes drying apparatus is the washing-drying integral machine, the chamber 1 is formed by an inner drum 11 of a drum of the washing-drying integral machine, and the negative pressure generating device 3 is disposed between an outer drum 12 of the drum and the housing of the washing-drying integral machine.

In some embodiments, the air duct structure 2 is configured to convey a cold airflow into the chamber 1, the cold airflow is used to solidify moisture in the clothes to be dried. After the moisture is solidified, the negative pressure generating device 3 forms a negative pressure environment in the chamber 1, and the solidified moisture in the clothes to be dried undergoes sublimation to achieve a clothes drying effect.

According to the present invention, the air duct structure 2 is not only configured to convey the cold airflow into the chamber 1, but also configured to convey a hot airflow into the chamber 1, the hot airflow is used to heat the clothes to be dried in the negative pressure environment, so as to promote the sublimation of the solidified moisture in the clothes to be dried. By conveying the hot airflow into the chamber 1, a drying efficiency is further improved, a drying speed is improved, and the user experience is improved.

According to the present invention, the clothes drying apparatus further includes a refrigerating portion 213 and a heating portion 223. The refrigerating portion 213 is configured to cool an airflow in the air duct structure 2, so that the air duct structure 2 conveys the cold airflow into the chamber 1. The heating portion 223 is configured to heat the airflow in the air duct structure 2, so that the air duct structure 2 conveys the hot airflow into the chamber 1. Certainly, it is understandable that when an outdoor environment temperature is low, the cold airflow entering the chamber 1 is also cooled without passing through the refrigerating portion 213; instead, the air duct structure 2 is directly connected to an outdoor environment, and an outdoor cold airflow is introduced into the chamber 1 to solidify the moisture in the clothes to be dried. Similarly, when the outdoor environment temperature is high, the hot airflow entering the chamber 1 is also heated without passing through the heating portion 223; instead, the air duct structure 2 is directly connected to the outdoor environment, and the outdoor hot airflow is introduced into the chamber 1. When the clothes drying apparatus is used in a hot and humid environment in the southern summer, in some embodiments, the clothes drying apparatus includes a dehydrating device (not shown in the figures) disposed in the air duct structure 2 to introduce dry hot airflow into the chamber 1, thereby ensuring the clothes drying effect.

In some optional embodiments, a chamber wall of the chamber 1 is provided with an air inlet 13 and an air outlet 14. The air duct structure 2 includes a first air duct portion 21 and a second air duct portion 22. The first end 211 of the first air duct portion 21 is communicated with the air outlet 14, a second end 212 of the first air duct portion 21 is communicated with the air inlet 13. The refrigerating portion 213 is disposed in an inner chamber of the first air duct portion 21. The first air duct portion 21 is configured to feed the cold airflow into the chamber 1. A first end 221 of the second air duct portion 22 is connected with the external environment. In some embodiments, in order to ensure that the airflow entering into the second air duct portion 22 from the external environment is clean, a filtering device 8 is disposed in the second air duct portion 22. The filtering device 8 filters the airflow in the second air duct portion 22. A second end 222 of the second air duct portion 22 is communicated with the air inlet 13. The heating portion 223 is disposed in the inner chamber of the second air duct portion 22. The second air duct portion 22 is configured to feed the hot airflow into the chamber 1. In order to simplify the air duct structure 2 and reduce a space occupied by the air duct structure 2, the air duct structure 2 further includes an air inlet duct portion 24 and an air outlet duct portion 23. Both the second end 212 of the first air duct portion 21 and the second end 222 of the second air duct portion 22 are connected with one end of the air inlet duct portion 24, and the other end of the air inlet duct portion 24 is connected with the air inlet 13. One end of the air outlet duct portion 23 is connected with the first end 211 of the first air duct portion 21, and the other end of the air outlet duct portion 23 is connected with the air outlet 14 of the chamber 1.

In order to facilitate switching between the first air duct portion 21 and the second air duct portion 22, so that the air duct structure 2 can convey both the cold airflow and the hot air flow into the chamber 1, the clothes drying apparatus includes an opening and closing device 4. The opening and closing device 4 is configured to open and close the first air duct portion 21. In some optional embodiments, as shown in Fig. 2 the first air duct portion 21 is a tubular structure, and the opening and closing device 4 includes a baffle 41 which is disposed on a duct wall of the first air duct portion 21 and capable of turning over. One end of the baffle 41 is hinged with the duct wall of the first air duct portion 21, and the other end of the baffle 41 is a free end which is capable of moving between a first position (point c in Fig. 2) and a second position (point b in Fig. 2). When the free end of the baffle 41 moves to the first position, the baffle 41 forms a part of the duct wall of the first air duct portion 21. When the free end of the baffle 41 moves to the second position, the baffle 41 closes the first air duct portion 21. Certainly, it is understandable that in a process of turning over the baffle 41, namely controlling the free end of the baffle 41 to switch between the first position and the second position, it can be controlled by means of control members like an electromagnetic relay, the electromagnetic relay is connected with a controller of the clothes drying apparatus, so as to control the free end of the baffle 41 to switch according to different clothes drying phases.

In order to improve a clothes drying rate, the clothes drying apparatus further includes an airflow driving portion 5, configured to drive the airflow to flow circularly between the first air duct 21 and the chamber 1. In some embodiments, the airflow driving portion 5 is a fan. The fan is disposed in the first air duct portion 21 in some embodiments, so that the cold airflow in the first air duct portion 21 circulates rapidly. At the same time, because the first end 221 of the second air duct portion 22 is connected to the external environment, arranging the fan in the first air duct portion 21 can avoid mixing the airflow from the external environment into the cold airflow to be conveyed to the chamber 1, thus affecting the solidification of the moisture in the clothes to be dried.

In order to further reduce the energy consumption of the clothes drying apparatus and enhance the drying effect of the clothes drying apparatus, the clothes drying apparatus includes a heat pump system 6. In some optional embodiments, the heat pump system 6 is disposed at top or bottom of the chamber 1 according to different internal structures of the clothes drying apparatus; correspondingly, the air duct structure 2 needs to be adjusted according to the position of the heat pump system 6.

According to the present invention, a first heat exchanger 61 and a second heat exchanger 62 are disposed on a refrigerant circulation flow path of the heat pump system 6. The first heat exchanger 61 forms the refrigerating portion 213, that is, the first heat exchanger 61 is an evaporator. The second heat exchanger 62 forms the heating portion 223, that is, the second heat exchanger 62 is a condenser. A throttling device 63 is disposed between the first heat exchanger 61 and the second heat exchanger 62. The throttling device 63 is a throttle valve in some embodiments. The heat pump system 6 further includes a compressor 64. The first heat exchanger 61 and the second heat exchanger 62 are respectively connected with the compressor 64. The refrigerant flows among the compressor 64, the second heat exchanger 62, the throttling device 63 and the first heat exchanger 61 to form a refrigerant circulation loop.

In order to accurately control the clothes drying process of the clothes drying apparatus, the clothes drying apparatus further includes a weight detecting device 7 configured to detect a weight of clothes in the chamber, so as to control the clothes drying process according to the weight of the clothes to be dried detected by the weight detecting device 7 or a variation of weight. In some optional embodiments, the clothes drying apparatus further includes a humidity detecting device (not shown in the figures), configured to detect the humidity of the gas pumped by the negative pressure generating device, so as to judge a clothes drying condition according to the humidity of the gas detected by the humidity detecting device. In some embodiments, the weight detecting device 7 is disposed on a side wall of the chamber 1, and the humidity detecting device is disposed at a position of an exhaust port of the negative pressure generating device 3. In addition, the clothes drying apparatus in some optional embodiments of the present disclosure needs to feed the hot airflow and the cold airflow into the chamber 1, which causes the weight detecting device 7 and the humidity detecting device to be in an environment with a large temperature difference, so in order to ensure that the weight detecting device 7 and the humidity detecting device are not affected by the temperature and can be always in a stable and accurate working state, an insulated structure is arranged at an outside of the weight detecting device 7 and the humidity detecting device. In some embodiments, the insulated structure is a tin foil wrapped outside the weight detecting device and the humidity detecting device.

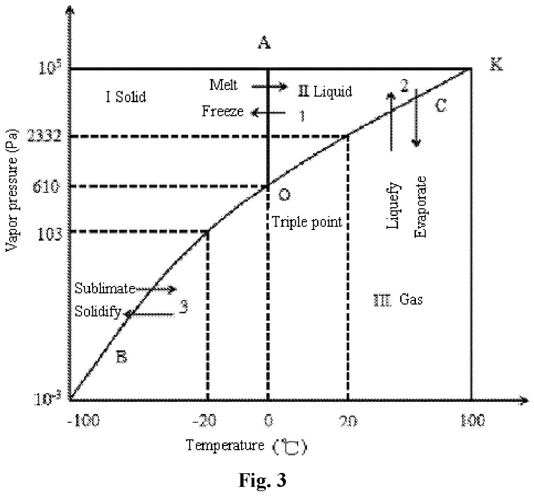

One of the embodiments of the present disclosure further provides a control method of a clothes drying apparatus, which is applied to controlling the clothes drying apparatus shown in Fig. 1 and Fig. 2, to dry the clothes to be dried in it. The clothes drying apparatus can be either a separate clothes drying apparatus or a washing-drying integral machine integrated with a clothes washing apparatus. When the clothes drying apparatus is the washing-drying integral machine, the chamber is a drum of the washing-drying integral machine. As shown in Fig. 3, the clothes drying apparatus in some embodiments of the present disclosure utilizes a sublimation principle to dry clothes. In the figure 3, OA is a melting line, OB is a sublimation line, OC is a boiling line, and an intersection point O of the three lines is a triple point. At the point O, moisture exists in three phases: solid, liquid and gas. If the moisture solidifies into ice, and an air pressure of the environment which it is in is lower than that at the point O, then if the ice is heated, the ice will sublimate directly into vapor without going through the liquid state. According to the above principle, the clothes to be dried are first frozen to make the moisture in them become solid, and then the negative pressure environment is formed in the chamber to realize the rapid sublimation of the moisture in the clothes, thereby achieving the effect of drying the clothes. Because an average free path of gas molecules is very small at atmospheric pressure, water molecules produced by the sublimation of ice easily collides with other gas molecules in the air and return to a sublimation surface again, which results in a very slow process of sublimation at atmospheric pressure. Thus, by setting the negative pressure generating device, the negative pressure environment is formed in the chamber to reduce an intensity of pressure in the chamber and ensure that a partial pressure of vapor in the gas in the chamber is lower than the corresponding saturated vapor pressure, so as to improve the sublimation rate and accelerate the clothes drying speed.

The control method of the clothes drying apparatus in some embodiments of the present disclosure includes a freezing step and a sublimating step. In the freezing step, the cold airflow is conveyed into the chamber 1 to solidify the moisture in the clothes to be dried. In the sublimating step, the negative pressure environment is formed in the chamber 1 by means of the negative pressure generating device 3 to sublimate the solidified moisture in the clothes to be dried. In order to further improve the sublimation rate, in the sublimating step, the hot airflow is conveyed into the chamber 1 to promote the sublimation of the solidified moisture in the clothes to be dried.

In some optional embodiments, the clothes drying apparatus includes the weight detecting device 7 and the humidity detecting device. The weight detecting device 7 detects a weight of the clothes to be dried in the chamber 1. The humidity detecting device detects a humidity of the airflow in the chamber 1 pumped by the negative pressure generating device 3. In the freezing step, the weight of the clothes to be dried is obtained. When a variation of the weight of the clothes to be dried in a first scheduled time is less than a predetermined variation, the clothes drying apparatus is controlled to enter the sublimating step. After the clothes drying apparatus enters the sublimating step for a second scheduled time, a humidity of gas pumped by the negative pressure generating device 3 is obtained. When the humidity of the gas is less than a predetermined humidity value, the clothes drying apparatus is controlled to exit the sublimating step. In some embodiments, the range of the first scheduled time is 2min to 5min, the predetermined variation is 10g to 30g, the second scheduled time is 50min to 70min, and the predetermined humidity value is relative humidity 0-5%. Certainly, it is understandable that there are various methods of judging whether the moisture in the clothes in the chamber 1 completely changes into ice, for example, the weight detecting device 7 is a weight sensor, and the freezing step is completed when the value of the weight sensor 7 does not change for a period of time.

In some optional embodiments, in the freezing step, the free end of the baffle 41 is at the first location, and the first air duct portion 21 is connected with the air inlet duct portion 24 and the air outlet duct portion 23 respectively, so as to convey the cold airflow in the first air duct portion 21 into the chamber 1. In the freezing step, the airflow driving member 5 is turned on, and a high-temperature and high-pressure refrigerant flowing out from the compressor 64 enters into the second heat exchanger 62. The high-temperature and high-pressure refrigerant condenses and releases heat in the second heat exchanger 62 and turns into a gas-liquid mixture; after that, it enters into the first heat exchanger 61 and evaporates by absorbing heat into a gaseous refrigerant, and then flows back into the compressor 64 to form the refrigerant circulation loop. Because the first heat exchanger 61 is in the first air duct portion 21, the refrigerant in the first heat exchanger 61 exchanges heat with the airflow in the first air duct portion 21, the refrigerant absorbs heat from the airflow in the first air duct portion 21 to form the cold airflow, and the cold airflow enters into the chamber 1 through the first air duct portion 21 and the air inlet duct portion 24, so as to turn the moisture in the clothes to be dried into ice. The airflow after undergoing heat exchange in the chamber 1 enters into the air outlet duct portion 23, and then returns to the first air duct portion 21 again for heat exchange; after becoming the cold airflow, the airflow enters into the chamber 1 again.

In the sublimating step, the free end of the baffle 41 moves from the first position to the second position to close the first air duct portion 21, and the airflow driving member 5 is not turned on. At the same time, in this step, the negative pressure generating device 3 is turned on to form a negative state in the chamber 1, thereby forming the pressure difference between the inside of the chamber 1 and the external environment. Under an action of the pressure difference, the gas in the external environment enters into the second air duct portion 22, and then enters into the chamber 1 through the air inlet duct portion 24, so that the moisture in the solid state in the clothes to be dried, namely ice, is directly sublimated into the gas to dry the clothes. In the sublimating step, the refrigerant in the second heat exchanger 62 in the second air duct portion 22 is heated with the airflow in the second air duct portion 22 to accelerate the sublimation speed.

When the clothes drying apparatus in some embodiments of the present disclosure is used in cold regions, such as northeast China in autumn and winter, an ambient temperature can reach -50 °C to -5 °C; at this temperature, the moisture in the clothes quickly freezes. Therefore, when the clothes are dried, the clothes in the chamber 1 are frozen without needing the second heat exchanger 62 of the heat pump system 6 to cool the airflow entering into the chamber 1, which further reduces energy consumption and saves resources.

Certainly, it is understandable that the heat pump system of the present disclosure not only include the structure described above, but also can be of compression type, induction type, semiconductor type, chemical type, etc., and can also use a magnetic refrigeration manner to cool the airflow entering into the chamber in the freezing step.

The clothes drying apparatus of the present disclosure is using a freeze drying technology to dry clothes. During the drying process, the ice formed by condensation of the moisture in the clothes gradually sublimates from a surface of the clothes to an inside of the clothes, so original shapes of the clothes will not be affected and there will be no deformation of the clothes. At the same time, because only the moisture in the clothes escapes from the clothes in the sublimation process, solutes dissolved in the moisture precipitates out and does not migrate with the sublimation of the moisture, the clothes will not fade after drying, and a storage effect of the clothes is better.

## Claims

1. A clothes drying apparatus, comprising: a chamber (1) configured to accommodate clothes to be dried, an air duct structure (2) communicated with the chamber (1) and a negative pressure generating device (3) communicated with the chamber (1); wherein, the air duct structure (2) is configured to convey a cold airflow into the chamber (1), the cold airflow is used to solidify water moisture in the clothes to be dried; the negative pressure generating device (3) is configured to form a negative pressure environment in the chamber (1), such that a solidified water moisture in the clothes to be dried undergoes sublimation in the negative pressure environment;
wherein the air duct structure (2) is further configured to convey a hot airflow into the chamber (1), wherein, the hot airflow is used to heat the clothes to be dried in the negative pressure environment, so as to promote the sublimation of the solidified water moisture in the clothes to be dried;
further comprising: a refrigerating portion (213), configured to cool an airflow in the air duct structure (2); and
a heating portion (223), configured to heat an airflow in the air duct structure (2);
**characterised in that**:
further comprising: a heat pump system (6); wherein, the heat pump system (6) comprises a first heat exchanger (61) and a second heat exchanger (62) disposed on a refrigerant circulation flow path of the heat pump system (6), the refrigerating portion (213) is formed by the first heat exchanger (61), and the heating portion (223) is formed by the second heat exchanger (62).

2. The clothes drying apparatus as claimed in claim 1, wherein a chamber wall of the chamber (1) is provided with an air inlet (13) and an air outlet (14); the air duct structure (2) comprises a first air duct portion (21) and a second air duct portion (22);
a first end (211) of the first air duct portion (21) is communicated with the air outlet (14), a second end (212) of the first air duct portion (21) is communicated with the air inlet (13), and the refrigerating portion (213) is disposed in an inner chamber of the first air duct portion (21); and/or,
a first end (221) of the second air duct portion (22) is communicated with an external environment, a second end (222) of the second air duct portion (22) is communicated with the air inlet (13), and the heating portion (223) is disposed in an inner chamber of the second air duct portion (22).

3. The clothes drying apparatus as claimed in claim 2, wherein the air duct structure (2) further comprises an air inlet duct portion (24); both the second end (212) of the first air duct portion (21) and the second end (222) of the second air duct portion (22) are connected with one end of the air inlet duct portion (24), and the other end of the air inlet duct portion (23) is connected with the air inlet (14).

4. The clothes drying apparatus as claimed in claim 2, further comprising an opening and closing device (4), configured to open and close the first air duct portion (21).

5. The clothes drying apparatus as claimed in claim 2, further comprising an airflow driving member (5), configured to drive the airflow to flow circularly between the first air duct portion (21) and the chamber (1).

6. The clothes drying apparatus as claimed in any one of claims 1 to 5, further comprising: a weight detecting device (7), configured to detect a weight of clothes in the chamber (1); and/or,
a humidity detecting device, configured to detect a humidity of gas pumped by the negative pressure generating device (3).

7. The clothes drying apparatus as claimed in claim 6, wherein the clothes drying comprises an insulated structure disposed at an outside of at least one of the weight detecting device (7) and the humidity detecting device.

8. A control method of a clothes drying apparatus, applied to controlling the clothes drying apparatus as claimed in any one of claims 1 to 7, comprising: a freezing step and a sublimating step; wherein in the freezing step, conveying a cold airflow into a chamber (1) to solidify water moisture in clothes to be dried; in the sublimating step, forming a negative pressure environment in the chamber (1) by means of the negative pressure generating device (3) to sublimate the solidified water moisture in the clothes to be dried.

9. The control method as claimed in claim 8, wherein in the sublimating step, conveying a hot airflow into the chamber (1) to promote a sublimation of the solidified water moisture in the clothes to be dried.

10. A control method of a clothes drying apparatus, applied to controlling the clothes drying apparatus as claimed in claim 6 or 7, comprising: a freezing step and a sublimating step; wherein in the freezing step, conveying a cold airflow into a chamber (1) to solidify water moisture in clothes to be dried; in the sublimating step, forming a negative pressure environment in the chamber (1) by means of the negative pressure generating device (3) to sublimate solidified water moisture in the clothes to be dried;
in the freezing step, obtaining a weight of the clothes to be dried, and controlling the clothes drying apparatus to enter the sublimating step when a variation of the weight of the clothes to be dried in first scheduled time is less than a predetermined variation; and/or,
after the clothes drying apparatus enters the sublimating step for a second scheduled time, obtaining a humidity of gas pumped by the negative pressure generating device (3), and controlling the clothes drying apparatus to exit the sublimating step when the humidity of the gas is less than a predetermined humidity value.

## Patentansprüche

1. Wäschetrocknungsvorrichtung, umfassend: eine Kammer (1), die ausgebildet ist, um zu trocknende Wäsche aufzunehmen, eine Luftkanalstruktur (2), die mit der Kammer (1) in Verbindung steht, und eine Unterdruckerzeugungsvorrichtung (3), die mit der Kammer (1) in Verbindung steht; wobei die Luftkanalstruktur (2) so ausgebildet ist, dass sie einen kalten Luftstrom in die Kammer (1) leitet, wobei der kalte Luftstrom verwendet wird, um Wasserfeuchtigkeit in der zu trocknenden Wäsche zu verfestigen; wobei die Unterdruckerzeugungsvorrichtung (3) so ausgebildet ist, dass sie eine Unterdruckumgebung in der Kammer (1) bildet, so dass eine verfestigte Wasserfeuchtigkeit in der zu trocknenden Wäsche in der Unterdruckumgebung einer Sublimation unterzogen wird;
wobei die Luftkanalstruktur (2) ferner so ausgebildet ist, dass sie einen Heißluftstrom in die Kammer (1) leitet, wobei der Heißluftstrom verwendet wird, um die zu trocknende Wäsche in der Unterdruckumgebung zu erwärmen, um so die Sublimation der verfestigten Wasserfeuchtigkeit in der zu trocknenden Wäsche zu fördern;
ferner umfassend: einen Kühlabschnitt (213), der so ausgebildet ist, dass er einen Luftstrom in der Luftkanalstruktur (2) kühlt; und
einen Heizabschnitt (223), der so ausgebildet ist, dass er einen Luftstrom in der Luftkanalstruktur (2) erwärmt;
**dadurch gekennzeichnet, dass**:
ferner umfassend: ein Wärmepumpensystem (6); wobei das Wärmepumpensystem (6) einen ersten Wärmetauscher (61) und einen zweiten Wärmetauscher (62) umfasst, die auf einem Kältemittelzirkulationsströmungsweg des Wärmepumpensystems (6) angeordnet sind, wobei der Kühlabschnitt (213) durch den ersten Wärmetauscher (61) gebildet wird und der Heizabschnitt (223) durch den zweiten Wärmetauscher (62) gebildet wird.

2. Wäschetrocknungsvorrichtung nach Anspruch 1, wobei eine Kammerwand der Kammer (1) mit einem Lufteinlass (13) und einem Luftauslass (14) versehen ist; wobei die Luftkanalstruktur (2) einen ersten Luftkanalabschnitt (21) und einen zweiten Luftkanalabschnitt (22) umfasst;
ein erstes Ende (211) des ersten Luftkanalabschnitts (21) mit dem Luftauslass (14) in Verbindung steht, ein zweites Ende (212) des ersten Luftkanalabschnitts (21) mit dem Lufteinlass (13) in Verbindung steht und der Kühlabschnitt (213) in einer Innenkammer des ersten Luftkanalabschnitts (21) angeordnet ist; und/oder,
ein erstes Ende (221) des zweiten Luftkanalabschnitts (22) mit einer Außenumgebung in Verbindung steht, ein zweites Ende (222) des zweiten Luftkanalabschnitts (22) mit dem Lufteinlass (13) in Verbindung steht und der Heizabschnitt (223) in einer Innenkammer des zweiten Luftkanalabschnitts (22) angeordnet ist.

3. Wäschetrocknungsvorrichtung nach Anspruch 2, wobei die Luftkanalstruktur (2) ferner einen Lufteinlass-Kanalabschnitt (24) umfasst; wobei sowohl das zweite Ende (212) des ersten Luftkanalabschnitts (21) als auch das zweite Ende (222) des zweiten Luftkanalabschnitts (22) mit einem Ende des Lufteinlass-Kanalabschnitts (24) verbunden sind, und das andere Ende des Lufteinlass-Kanalabschnitts (23) mit dem Lufteinlass (14) verbunden ist.

4. Wäschetrocknungsvorrichtung nach Anspruch 2, die ferner eine Öffnungs- und Schließvorrichtung (4) umfasst, die so ausgebildet ist, dass sie den ersten Luftkanalabschnitt (21) öffnet und schließt.

5. Wäschetrocknungsvorrichtung nach Anspruch 2, die ferner ein Luftstrom-Antriebselement (5) umfasst, das so ausgebildet ist, dass es den Luftstrom so antreibt, dass er zwischen dem ersten Luftkanalabschnitt (21) und der Kammer (1) kreisförmig fließt.

6. Wäschetrocknungsvorrichtung nach einem der Ansprüche 1 bis 5, ferner umfassend: eine Gewichtserfassungsvorrichtung (7), die so ausgebildet ist, dass sie ein Gewicht von Wäsche in der Kammer (1) erfasst; und/oder,
eine Feuchtigkeitserfassungsvorrichtung, die so ausgebildet ist, dass sie eine Feuchtigkeit des von der Unterdruckerzeugungsvorrichtung (3) gepumpten Gases erfasst.

7. Wäschetrocknungsvorrichtung nach Anspruch 6, wobei die Wäschetrocknung eine isolierte Struktur umfasst, die an der Außenseite wenigstens einer der Gewichtserfassungsvorrichtung (7) und der Feuchtigkeitserfassungsvorrichtung angeordnet ist.

8. Verfahren zur Steuerung einer Wäschetrocknungsvorrichtung, die zur Steuerung der Wäschetrocknungsvorrichtung nach einem der Ansprüche 1 bis 7 angewandt wird, umfassend: einen Gefrierschritt und einen Sublimationsschritt; wobei im Gefrierschritt ein kalter Luftstrom in eine Kammer (1) geleitet wird, um die Wasserfeuchtigkeit in der zu trocknenden Wäsche zu verfestigen; wobei im Sublimationsschritt eine Unterdruckumgebung in der Kammer (1) mittels der Unterdruckerzeugungsvorrichtung (3) gebildet wird, um die verfestigte Wasserfeuchtigkeit in der zu trocknenden Wäsche zu sublimieren.

9. Verfahren zur Steuerung nach Anspruch 8, wobei im Sublimationsschritt ein Heißluftstrom in die Kammer (1) geleitet wird, um eine Sublimation der verfestigten Wasserfeuchtigkeit in der zu trocknenden Wäsche zu fördern.

10. Verfahren zur Steuerung einer Wäschetrocknungsvorrichtung, die zur Steuerung der Wäschetrocknungsvorrichtung nach Anspruch 6 oder 7 angewendet wird, umfassend: einen Gefrierschritt und einen Sublimationsschritt; wobei im Gefrierschritt ein kalter Luftstrom in eine Kammer (1) geleitet wird, um Wasserfeuchtigkeit in der zu trocknenden Wäsche zu verfestigen; wobei im Sublimationsschritt eine Unterdruckumgebung in der Kammer (1) mittels der Unterdruckerzeugungsvorrichtung (3) gebildet wird, um verfestigte Wasserfeuchtigkeit in der zu trocknenden Wäsche zu sublimieren;
im Gefrierschritt Ermitteln eines Gewichts der zu trocknenden Wäsche und Steuern der Wäschetrocknungsvorrichtung, um in den Sublimationsschritt überzugehen, wenn eine Variation des Gewichts der zu trocknenden Wäsche in der ersten geplanten Zeit kleiner als eine vorbestimmte Variation ist; und/oder,
nachdem die Wäschetrocknungsvorrichtung für eine zweite geplante Zeit in den Sublimationsschritt übergegangen ist, Ermitteln einer Feuchtigkeit des von der Unterdruckerzeugungsvorrichtung (3) gepumpten Gases und Steuerung der Wäschetrocknungsvorrichtung so, dass sie den Sublimationsschritt verlässt, wenn die Feuchtigkeit des Gases geringer als ein vorbestimmter Feuchtigkeitswert ist.

## Revendications

1. Appareil de séchage de vêtements comprenant : une chambre (1) configurée pour recevoir des vêtements à sécher, une structure de conduit d'air (2) communiquant avec la chambre (1) et un dispositif de génération de pression négative (3) communiquant avec la chambre (1) ; dans lequel, la structure de conduit d'air (2) est configurée pour acheminer un flux d'air froid dans la chambre (1), le flux d'air froid est utilisé pour solidifier l'humidité de l'eau dans les vêtements à sécher ; le dispositif de génération de pression négative (3) est configuré pour former un environnement de pression négative dans la chambre (1), de sorte que l'humidité de l'eau solidifiée dans les vêtements à sécher subisse une sublimation dans l'environnement de pression négative ;
dans lequel la structure du conduit d'air (2) est en outre configurée pour acheminer un flux d'air chaud dans la chambre (1), dans lequel le flux d'air chaud est utilisé pour chauffer les vêtements à sécher dans l'environnement à pression négative, de manière à favoriser la sublimation de l'humidité de l'eau solidifiée dans les vêtements à sécher ;
comprenant en outre : une partie réfrigérante (213), configurée pour refroidir un flux d'air dans la structure du conduit d'air (2) ; et
une partie chauffante (223), configurée pour chauffer un flux d'air dans la structure du conduit d'air (2) ;
**caractérisé en ce que** :
comprenant en outre : un système de pompe à chaleur (6) ; dans lequel le système de pompe à chaleur (6) comprend un premier échangeur de chaleur (61) et un second échangeur de chaleur (62) disposés sur un chemin de circulation du réfrigérant du système de pompe à chaleur (6), la partie réfrigérante (213) est formée par le premier échangeur de chaleur (61), et la partie chauffante (223) est formée par le second échangeur de chaleur (62).

2. Appareil de séchage du linge selon la revendication 1, dans lequel une paroi de la chambre (1) est pourvue d'une entrée d'air (13) et d'une sortie d'air (14) ; la structure du conduit d'air (2) comprend une première partie de conduit d'air (21) et une seconde partie de conduit d'air (22) ;
une première extrémité (211) de la première partie du conduit d'air (21) est en communication avec la sortie d'air (14), une seconde extrémité (212) de la première partie du conduit d'air (21) est en communication avec l'entrée d'air (13), et la partie réfrigérante (213) est disposée dans une chambre intérieure de la première partie du conduit d'air (21) ; et/ou,
une première extrémité (221) de la seconde partie du conduit d'air (22) est en communication avec un environnement extérieur, une seconde extrémité (222) de la seconde partie du conduit d'air (22) est
en communication avec l'entrée d'air (13), et la partie chauffante (223) est disposée dans une chambre intérieure de la seconde partie du conduit d'air (22).

3. Appareil de séchage des vêtements selon la revendication 2, dans lequel la structure de conduit d'air (2) comprend en outre une partie de conduit d'entrée d'air (24) ; la seconde extrémité (212) de la première partie de conduit d'air (21) et la seconde extrémité (222) de la seconde partie de conduit d'air (22) sont reliées à une extrémité de la partie de conduit d'entrée d'air (24), et l'autre extrémité de la partie de conduit d'entrée d'air (23) est reliée à l'entrée d'air (14).

4. Appareil de séchage du linge selon la revendication 2, comprenant en outre un dispositif d'ouverture et de fermeture (4), configuré pour ouvrir et fermer la première partie du conduit d'air (21).

5. Appareil de séchage du linge selon la revendication 2, comprenant en outre un élément d'entraînement du flux d'air (5), configuré pour entraîner le flux d'air à circuler circulairement entre la première partie du conduit d'air (21) et la chambre (1).

6. Appareil de séchage du linge selon l'une quelconque des revendications 1 à 5, comprenant en outre : un dispositif de détection du poids (7), configuré pour détecter le poids des vêtements dans la chambre (1) ; et/ou,
un dispositif de détection de l'humidité, configuré pour détecter l'humidité du gaz pompé par le dispositif de génération de pression négative (3).

7. Appareil de séchage du linge selon la revendication 6, dans lequel le séchage du linge comprend une structure isolée disposée à l'extérieur d'au moins un des dispositifs de détection du poids (7) et du dispositif de détection de l'humidité.

8. Procédé de commande d'un appareil de séchage de vêtements, appliquée à la commande de l'appareil de séchage de vêtements selon l'une des revendications 1 à 7, comprenant : une étape de congélation et une étape de sublimation ; dans lequel dans l'étape de congélation, un flux d'air froid est acheminé dans une chambre (1) pour solidifier l'humidité de l'eau dans les vêtements à sécher ; dans l'étape de sublimation, un environnement de pression négative est formé dans la chambre (1) au moyen du dispositif de génération de pression négative (3) pour sublimer l'humidité de l'eau solidifiée dans les vêtements à sécher.

9. Procédé de commande selon la revendication 8, dans lequel, lors de l'étape de sublimation, un flux d'air chaud est acheminé dans la chambre (1) afin de favoriser la sublimation de l'humidité de l'eau solidifiée dans les vêtements à sécher.

10. Procédé de commande d'un appareil de séchage de vêtements, appliquée à la commande de l'appareil de séchage de vêtements selon l'une des revendications 6 ou 7, comprenant : une étape de congélation et une étape de sublimation ; dans lequel dans l'étape de congélation, un flux d'air froid est acheminé dans une chambre (1) pour solidifier l'humidité de l'eau dans les vêtements à sécher ; dans l'étape de sublimation, un environnement de pression négative est formé dans la chambre (1) au moyen du dispositif de génération de pression négative (3) pour sublimer l'humidité de l'eau solidifiée dans les vêtements à sécher ;
dans l'étape de congélation, l'obtention d'un poids des vêtements à sécher, et la commande de l'appareil de séchage des vêtements pour qu'il entre dans l'étape de sublimation lorsqu'une variation du poids des vêtements à sécher dans le premier temps programmé est inférieure à une variation prédéterminée ; et/ou,
après que l'appareil de séchage des vêtements est entré dans l'étape de sublimation pour une seconde fois, l'obtention de l'humidité du gaz pompé par le dispositif de génération de pression négative (3), et la commande de l'appareil de séchage des vêtements pour sortir de l'étape de sublimation lorsque l'humidité du gaz est inférieure à une valeur d'humidité prédéterminée.
